# EUROPEAN PATENT APPLICATION

(11) **EP 4 252 957 A1**
(43) Date of publication of application: **04.10.2023**
(21) Application number: 21925763.1
(22) Date of filing: 26.10.2021
(51) Int. Cl.: B23K 26/38, B21B 1/22, B21B 15/00

(54) **LASER CUTTING METHOD FOR STEEL STRIP, LASER CUTTING EQUIPMENT, COLD ROLLING METHOD, AND MANUFACTURING METHOD OF COLD-ROLLED STEEL STRIP**

(30) Priority: 15.02.2021 JP 2021021847
(71) Applicant: JFE Steel Corporation, Tokyo 100-0011 (JP)
(72) Inventor: FUJITA, Noriki, Tokyo 100-0011 (JP); MATSUBARA, Yukihiro, Tokyo 100-0011 (JP); FUKUNAGA, Takayuki, Tokyo 100-0011 (JP)
(74) Representative: Grünecker Patent- und Rechtsanwälte PartG mbB
(86) International application number: PCT/JP2021/039401
(87) International publication number: WO 2022/172516

(57) **Abstract**

A laser cutting method for a steel strip according to the present invention includes cutting an end in a width direction of the steel strip including a joint obtained by joining a rear end of a preceding steel strip and a front end of a following steel strip by using a laser beam, in which the steel strip is cut such that an interval between pieces of dross having an aspect ratio of 1.0 or more is set to 1.0 mm or more and an interval between dross having an aspect ratio of 1.0 or more and dross having an aspect ratio of less than 1.0 is set to 1.0 mm or more in the end in the width direction after cutting.

## Description

### Field

The present invention relates to a laser cutting method, a laser cutting facility, and a cold rolling method for a steel strip, and a method of manufacturing a cold rolled steel strip.

### Background

In a process of cold rolling for a steel strip, for the purpose of improving productivity and a yield, usually, a rear end of a preceding material (preceding steel strip) and a front end of a following material (following steel strip) are joined, and the steel strip is continuously supplied to a cold rolling line. As a result, the steel strip can be rolled with tension being applied to the entire length. The thickness and the shape of a front end and a rear end of the steel strip can be controlled with high accuracy.

Highly alloyed cold rolled steel strips and advanced laser welding machines have gradually brought joining of the preceding material and the following material by laser welding into the mainstream instead of conventional flash butt welding and the like. Regardless of welding means such as the flash butt welding and the laser welding, however, a step is inevitably formed at an end in a width direction of a joint (welded portion) between the preceding material and the following material due to differences in width and thickness between the preceding material and the following material, misalignment, and the like. Thus, if the steel strip is rolled in this state, stress may concentrate on the stepped portion, and the steel strip may fracture at the welded portion. If the steel strip fractures at the welded portion, the cold rolling line is forced to be stopped, which remarkably reduces productivity. Furthermore, a work roll damaged by a fractured piece needs to be replaced, which increases production costs.

In particular, in recent years, there has been increasing demands for reduction in gauge and increase in strength of a cold rolled steel strip for the purpose of reduction in weight and improvement in characteristics of a member. Such a situation then increases a rolling reduction and a rolling load required for cold rolling. An increase in stress concentration at a stepped portion increases a fracture rate of a steel strip at present. Therefore, a steel strip is rolled after performing notching of forming a notch (cut portion) at an end in a width direction of a welded portion for the purpose of alleviating the stress concentration at the vicinity of the stepped portion to inhibit the fracture of the steel strip at the welded portion. Note that the end in the width direction of the steel strip tends to have a poor butt accuracy and the like, insufficient welding, and a low strength. Thus, the notching is also performed for cutting off a portion having a low strength (approximately 30 mm from end in width direction).

Examples of a common notching method include a method of forming a semicircular notch without a corner by mechanical shearing as described in Patent Literature 1. The semicircular notch, however, has a uniform curvature of an outer edge and the smallest width of a steel strip at a welded portion, which generates the maximum stress at the welded portion. Therefore, Patent Literature 2 describes a method of forming a notch by laser cutting as a method for shortening a notching time. Furthermore, Patent Literature 3 describes a laser cutting method in which a small amount of dross (melt at time of laser cutting) is generated.

### Citation List

### Patent Literature

Patent Literature 1: JP H05-76911 A
Patent Literature 2: JP S60-115387 A
Patent Literature 3: JP 6354793 B2

### Summary

### Technical Problem

In a notching method as described above, however, at present, sufficient effects cannot be exerted and fracture of a steel strip at a welded portion cannot be sufficiently inhibited particularly at the time of performing cold rolling on a brittle material and a high-alloy material such as a silicon steel sheet and a high-tensile steel sheet containing a large amount of Si and Mn.

The present invention has been made in view of the above-described problems, and an object thereof is to provide a laser cutting method and a laser cutting facility for a steel strip capable of inhibiting fracture of the steel strip at a welded portion even in a case of a brittle material and a high-alloy material. Furthermore, another object of the present invention is to provide a cold rolling method for a steel strip capable of inhibiting fracture of the steel strip at a welded portion even in a case of a brittle material and a high-alloy material and stably performing cold rolling. Moreover, another object of the present invention is to provide a method of manufacturing a cold rolled steel strip capable of inhibiting fracture of a steel strip at a welded portion even in a case of a brittle material and a high-alloy material and stably manufacturing the cold rolled steel strip.

### Solution to Problem

The inventors of the present invention have found that dross generated on a cross section of a steel strip cut by a laser beam may extend to have a sharp shape by cold rolling and serve as a point of origin of cracking from an end in a width direction of the steel strip. Therefore, the inventors considered the relation between dross and cracking susceptibility of a steel strip. As a result, the inventors have found that the cracking susceptibility of a steel strip increases in a case where dross is densely generated at the time of laser cutting. Then, the inventors of the present invention have had a finding that the cracking from an end in the width direction of the steel strip can be inhibited also after the cold rolling by controlling an aspect ratio of dross (dross height/dross width) on a laser cutting surface of the steel strip and an interval between pieces of dross.

Furthermore, the inventors have found that, even if the steel strip is cut by a laser beam, if a work-hardened shear surface remains in the vicinity of a welded portion, the part serves as a point of origin of stress concentration and causes fracture of the steel strip in the vicinity of the welded portion. Specifically, a cold rolled steel strip in the vicinity of the welded portion is subject to circular hole processing to the vicinity of a central portion in the width direction by using a puncher at the time of welding. The hole processing is performed for causing a cold tandem rolling mill to track a welding point position. Since the puncher is used in punching, a puncher fracture surface is a shear surface. Therefore, when high-load cold rolling is performed, stress concentrates from the puncher fracture surface, and the steel strip fractures in the vicinity of the welded portion.

The present invention has been made based on the above-described idea, and has the following features.

To solve the problem and achieve the object, a laser cutting method for a steel strip according to the present invention includes cutting an end in a width direction of the steel strip including a joint obtained by joining a rear end of a preceding steel strip and a front end of a following steel strip by using a laser beam, wherein the steel strip is cut such that an interval between pieces of dross having an aspect ratio of 1.0 or more is set to 1.0 mm or more and an interval between dross having an aspect ratio of 1.0 or more and dross having an aspect ratio of less than 1.0 is set to 1.0 mm or more in the end in the width direction after cutting.

Moreover, in the laser cutting method for the steel strip according to the present invention, a cutting process of cutting the end in the width direction and a hole forming process of forming one or more holes in the steel strip with a laser are continuously executed with the steel strip being stopped.

Moreover, a laser cutting facility for a steel strip according to the present invention is the facility in which the laser cutting method for the steel strip according to the present invention is executed.

Moreover, a cold rolling method for a steel strip according to the present invention includes performing cold rolling on a steel strip cut by the laser cutting method for the steel strip according to the present invention.

Moreover, a method of manufacturing a cold rolled steel strip according to the present invention includes manufacturing the cold rolled steel strip by a process including the cold rolling method for the steel strip according to the present invention.

### Advantageous Effects of Invention

According to a laser cutting method and a laser cutting facility for a steel strip of the present invention, fracture of the steel strip at a welded portion can be inhibited even in a case of a brittle material and a high-alloy material. Furthermore, according to a cold rolling method for a steel strip of the present invention, fracture of the steel strip at a welded portion can be inhibited even in a case of a brittle material and a high-alloy material, and cold rolling can be stably performed. Moreover, according to a method of manufacturing a cold rolled steel strip of the present invention, fracture of a steel strip at a welded portion can be inhibited even in a case of a brittle material and a high-alloy material, and the cold rolled steel strip can be stably manufactured.

### Brief Description of Drawings

FIG. 1 is a schematic view illustrating a laser cutting method for a steel strip according to one embodiment of the present invention.
FIG. 2 includes a cross-sectional image and a surface image of a sample material after cold rolling on a portion where a large amount of dross is generated.
FIG. 3 includes a cross-sectional image and a surface image of a sample material after cold rolling on a portion where a small amount of dross is generated.
FIG. 4 illustrates a duty factor.

### Description of Embodiments

A laser cutting method, a laser cutting facility, a cold rolling method for a steel strip, and a method of manufacturing a cold rolled steel strip according to one embodiment of the present invention will be described below with reference to the drawings. Note that the following embodiment illustrates an apparatus and a method for embodying the technical idea of the present invention, and does not specify the materials, shapes, structures, arrangements, and the like of components to those in the following embodiment. Furthermore, the drawings are schematic. Therefore, it should be noted that the relation, the ratio, and the like between a thickness and a planar dimension are different from actual ones, and the relation and the ratio between each other in mutual drawings are different in some portions.

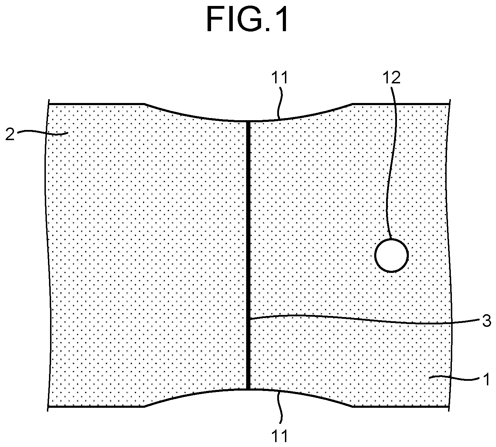

FIG. 1 is a schematic view illustrating a laser cutting method for a steel strip according to one embodiment of the present invention. As illustrated in FIG. 1, in the laser cutting method for a steel strip according to one embodiment of the present invention, cutting using a laser beam (laser cutting) is performed on a predetermined range of the steel strip including ends in a width direction of a welded portion 3 between a rear end of a preceding steel strip 1 and a front end of a following steel strip 2 to form an arc-shaped notch 11. This enables the notch 11 to be formed without causing work hardening at the end in the width direction of the welded portion 3. Furthermore, even in a case of a brittle material and a high-alloy material such as a silicon steel sheet and a high-tensile steel sheet containing a large amount of Si or Mn, the preceding steel strip 1 and the following steel strip 2 can be continuously cold-rolled without causing fracture at the welded portion 3. Note that the shape of the notch 11 and a trajectory of laser cutting (scanning trajectory of laser beam) are not limited to those in the embodiment. The notch 11 may have another shape such as a semicircular shape and a substantially isosceles trapezoidal shape.

In the embodiment, a laboratory-scale rolling experiment to be described below was performed in order to evaluate the influence of dross remaining on a cut surface of a steel strip at the time of laser cutting on cold rolling. That is, a silicon steel sheet having a sheet thickness of 2 mm was used as a sample material. The silicon steel sheet contained 3.3 mass% of Si. Both ends in the width direction of the silicon steel sheet were cut by a laser. Then, cold rolling at a total rolling reduction of 50% was performed on the sample material by using a rolling mill having a work roll diameter of 500 mm without applying tension.

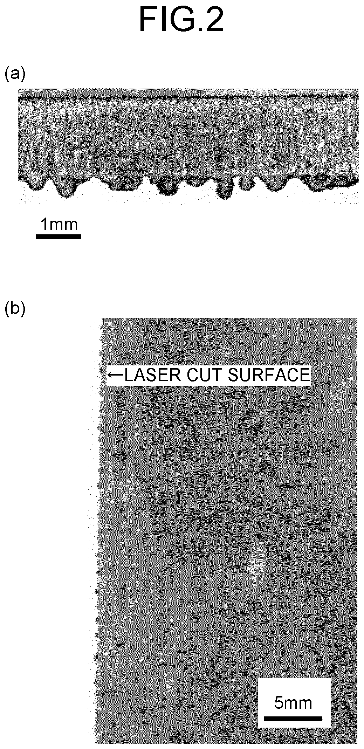

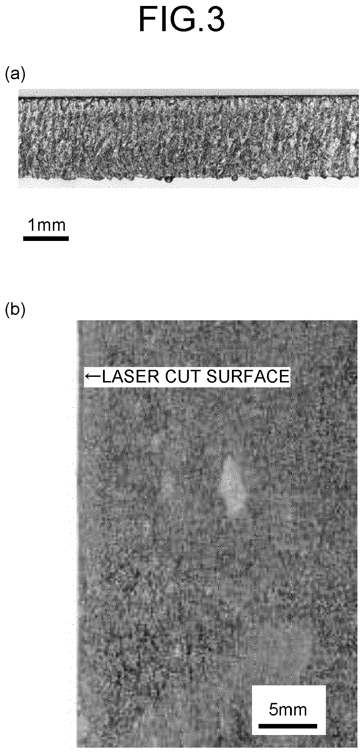

FIGS. 2(a) and (b) are a cross-sectional image and a surface image of the sample material after cold rolling on a portion where a large amount of dross is generated. Furthermore, FIGS. 3(a) and (b) are a cross-sectional image and a surface image of the sample material after cold rolling on a portion where a small amount of dross is generated. As is clear from comparison between FIGS. 2 and 3, when dross remains due to a defect of a laser cutting condition, the dross remains even after the cold rolling, and the dross develops to have a sharp shape. In the experiment, tension was not applied to the sample material. In actual production, however, cold rolling is performed while tension is applied in tandem rolling. In the tandem rolling, the dross that has developed to have a sharp shape is estimated to serve as a point of origin of stress concentration and cause fracture of a steel strip at a welded portion.

From the above, in the embodiment, the interval between pieces of dross having an aspect ratio (dross height/dross width) of 1.0 or more generated at the time of laser cutting is set to 1.0 mm or more, and the interval between dross having an aspect ratio of 1.0 or more and dross having an aspect ratio of less than 1.0 is set to 1.0 mm or more. In such a dross state, even in the case of a brittle material and a high-alloy material such as a silicon steel sheet and a high-tensile steel sheet containing a large amount of Si or Mn, dross is inhibited from developing to have a sharp shape at the time of cold rolling, and cold rolling can be performed without causing the fracture of a steel strip at a welded portion.

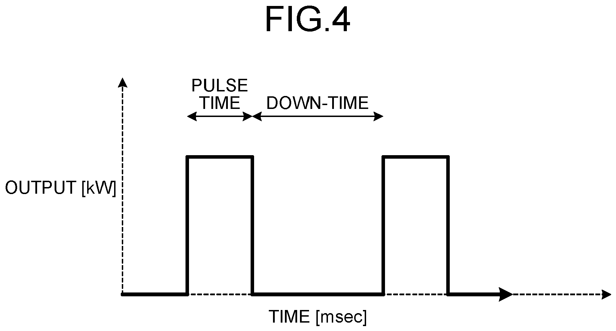

Note that, in the embodiment, a processing condition of laser cutting is not required to be particularly limited except that the interval between pieces of dross having an aspect ratio of 1.0 or more generated at the time of laser cutting is set to 1.0 mm or more, and the interval between dross having an aspect ratio of 1.0 or more and dross having an aspect ratio of less than 1.0 is set to 1.0 mm or more. The processing condition is only required to be appropriately set in accordance with the thickness of the steel strip and the like. For example, laser output is set to 0.5 kw or more per 1 ms. The processing point diameter of a laser beam is set to 0.1 mm or more and less than 1.0 mm. The ratio (duty factor) between a pulse period time and a pulse time in FIG. 4 is set to 0.3 or more and less than 0.8. Furthermore, compressed air, nitrogen, and oxygen can be used as gas used for a pulse-type laser beam. Furthermore, the gas pressure is preferably set to 0.5 MPa or more. In addition, in the embodiment, punching to the vicinity of a central portion in the width direction of a steel strip, which has been conventionally performed by a puncher, is performed by laser cutting of a closed cross-sectional shape. Note that, although, in the example in FIG. 1, a hole 12 having a closed cross-sectional shape is formed in the preceding steel strip 1, the hole 12 may be formed in the following steel strip 2. Furthermore, the closed cross-sectional shape, the number of cut holes, and the cutting position coordinates are also not particularly limited. Furthermore, when a method of tracking a welding point is implemented by a leakage flux method and another image determination method, the hole is not required to be formed.

In addition, conventional shearing does not cause cracking (edge cracking) at an end in the width direction in normal low-carbon steel. Therefore, the present invention is not necessarily required to be applied to a type of steel in which fracture hardly occurs in the vicinity of a welded portion. The present invention should be applied to a type of steel such as a brittle material and a high-alloy material in which a welded portion fractures by shearing. Note, however, that a cold tandem rolling mill may be a dedicated mill for a silicon steel sheet and a high-tensile steel sheet, or may be a dual-use mill that rolls low-carbon steel together. In that case, notching for low-carbon steel by laser cutting causes no problem. Furthermore, both a shearing machine and a laser cutting machine may be provided together and used depending on the type of steel.

### [Example]

The present invention will be described below based on an example. An experiment was performed by using a cold tandem rolling mill including a total of five rolling stands. In the experiment, a material steel sheet for an electromagnetic steel sheet was adopted as a material to be rolled. The material steel sheet had a base thickness of 2.0 mm and a sheet width of 1000 mm, and contains 2.8 to 3.3 mass% of Si. The material steel sheet was cold-rolled to have a finished thickness of 0.300 mm. In the example, laser cutting was performed based on the embodiment of the present invention. That is, in the vicinity of a welded portion between a preceding steel strip and a following steel strip, semicircular laser cutting for both end surfaces of the steel strip and circular closed cross-sectional laser cutting for a width central position of the preceding steel strip were performed. Note that gas type: compressed air, gas pressure: 1.0 MPa, laser output: 0.8 kW, duty factor: 0.5, and scanning speed: 3.0 m/min, were set as cutting conditions. Furthermore, in a comparative example, rolling was performed similarly to that in the example except that laser cutting was performed not under a condition satisfying the condition of the present invention but under a laser cutting condition that causes much dross having a sharp shape. Table 1 illustrates dross states and fracture coil incidences after rolling 100 coils in the example and the comparative example in which the laser cutting as described above was performed.

**Table 1**

| Condition | Si amount [%] | Dross aspect ratio | Adjacent dross aspect ratio | Dross interval [mm] | Puncher method | Fracture incidence [%] | Note |
|---|---|---|---|---|---|---|---|
| 1 | 3.0 | 0.5 | 0.5 | 2.0 | Laser | 1.0 | Example |
| 2 | 3.0 | 0.5 | 0.5 | 0.8 | Laser | 1.5 | Example |
| 3 | 3.0 | 1.0 | 0.5 | 2.0 | Laser | 1.5 | Example |
| 4 | 3.0 | 1.0 | 1.2 | 5.0 | Laser | 2.0 | Example |
| 5 | 3.0 | 1.2 | 1.5 | 0.5 | Laser | 12.0 | Comparative example |
| 6 | 3.0 | 0.5 | 1.5 | 0.5 | Laser | 8.0 | Comparative example |
| 7 | 3.0 | 0.5 | 0.5 | 2.0 | Shearing | 2.0 | Example |
| 8 | 2.8 | 0.5 | 0.5 | 2.0 | Laser | 1.0 | Example |
| 9 | 3.3 | 0.5 | 0.5 | 2.0 | Laser | 1.5 | Example |

As illustrated in Table 1, the incidence of the fracture of a welded portion was 8.0 to 12.0% in the comparative example while the incidence of the fracture of the welded portion was 2% or less in the example. This confirmed the effectiveness of the present invention. That is, an amount of dross having a sharp shape can be reduced and a work-hardened portion in the vicinity of a welded portion can be eliminated by applying the present invention and performing laser cutting on the vicinity of the welded portion between a preceding steel strip and a following steel strip. Then, this can inhibit the occurrence of the fracture of the welded portion and improve productivity and a yield.

Although the embodiment to which the invention made by the present inventors is applied has been described above, the present invention is not limited by the description and the drawings constituting a part of the disclosure of the present invention according to the embodiment. That is, other embodiments, examples, operation techniques, and the like made by those skilled in the art based on the embodiment are all included in the scope of the present invention.

### Industrial Applicability

According to the present invention, a laser cutting method and a laser cutting facility for a steel strip capable of inhibiting fracture of the steel strip at a welded portion even in a case of a brittle material and a high-alloy material can be provided. Furthermore, according to the present invention, a cold rolling method for a steel strip capable of inhibiting fracture of the steel strip at a welded portion even in a case of a brittle material and a high-alloy material and stably performing cold rolling can be provided. Moreover, according to the present invention, a method of manufacturing a cold rolled steel strip capable of inhibiting fracture of a steel strip at a welded portion even in a case of a brittle material and a high-alloy material and stably manufacturing the cold rolled steel strip can be provided.

### Reference Signs List

- 1: PRECEDING STEEL STRIP
- 2: FOLLOWING STEEL STRIP
- 11: NOTCH
- 12: HOLE

## Claims

1. A laser cutting method for a steel strip, comprising cutting an end in a width direction of the steel strip including a joint obtained by joining a rear end of a preceding steel strip and a front end of a following steel strip by using a laser beam,
wherein the steel strip is cut such that an interval between pieces of dross having an aspect ratio of 1.0 or more is set to 1.0 mm or more and an interval between dross having an aspect ratio of 1.0 or more and dross having an aspect ratio of less than 1.0 is set to 1.0 mm or more in the end in the width direction after cutting.

2. The laser cutting method for the steel strip according to claim 1, wherein a cutting process of cutting the end in the width direction and a hole forming process of forming one or more holes in the steel strip with a laser are continuously executed with the steel strip being stopped.

3. A laser cutting facility for a steel strip, in which the laser cutting method for the steel strip according to claim 1 or 2 is executed.

4. A cold rolling method for a steel strip, comprising performing cold rolling on a steel strip cut by the laser cutting method for the steel strip according to claim 1 or 2.

5. A method of manufacturing a cold rolled steel strip, comprising manufacturing the cold rolled steel strip by a process including the cold rolling method for the steel strip according to claim 4.
